# EUROPÄISCHE PATENTSCHRIFT

(11) **EP 3 284 649 B1**
(45) Veröffentlichungstag und Bekanntmachung des Hinweises auf die Patenterteilung: **10.11.2021**
(21) Anmeldenummer: 17184162.0
(22) Anmeldetag: 01.08.2017
(51) Int. Cl.: B62D 13/06, B60D 1/30, B62D 15/02

(54) **UNTERSTÜTZUNG EINES FAHRERS EINES KRAFTFAHRZEUGS MIT EINEM ANGEHÄNGTEN ANHÄNGER BEIM EINPARKEN DURCH VIRTUELLE SENSOREN**
DRIVER ASSISTANCE FOR PARKING A MOTOR VEHICLE AND A TRAILER BY MEANS OF VIRTUAL SENSORS
ASSISTANCE AU CONDUCTEUR POUR LA MISE EN STATIONNEMENT D'UN VÉHICULE AUTOMOBILE COMPRENANT UNE REMORQUE ATTELÉE À PARTIR DE CAPTEURS VIRTUELS

(30) Priorität: 16.08.2016 DE 102016115132
(43) Veröffentlichungstag der Anmeldung: 21.02.2018
(73) Patentinhaber: Valeo Schalter und Sensoren GmbH, 74321 Bietigheim-Bissingen (DE)
(72) Erfinder: Ayyappan, Thirumalai-Kumarasamy, 74321 Bietigheim-Bissingen (DE)
(74) Vertreter: Pothmann, Karsten

(56) Entgegenhaltungen:
- EP-A1- 2 551 132
- DE-A1- 3 844 340
- DE-A1-102012 207 647
- DE-A1-102014 013 219
- US-A1- 2015 197 281
- US-A1- 2016 129 939
- US-A1- 2016 152 263

## Beschreibung

Die Erfindung betrifft ein Verfahren zum Unterstützen eines Fahrers eines Kraftfahrzeugs mit einem angehängten Anhänger bei einem Einparken des Kraftfahrzeugs mit dem Anhänger in eine Parklücke mit Hilfe einer Fahrerassistenzeinrichtung des Kraftfahrzeugs. Die Erfindung betrifft auch eine entsprechende Fahrerassistenzeinrichtung.

Gerade im Bereich des Einparkens spielt das automatisierte Fahren, sei es teil-, hoch-oder vollautomatisiert, in zunehmendem Maße eine Rolle. Entsprechend gibt es auch eine Vielzahl von Fahrerassistenzsystemen oder Fahrerassistenzeinrichtungen für Kraftfahrzeuge, welche in Parksituationen einen Fahrer des Kraftfahrzeugs unterstützen und ihm in einem unterschiedlichen Grad beim Einparken behilflich sind.

So offenbart Die DE 10 2015 114 87 A1 ein Parksystem, welches ein Fahrzeug während eines Parkmanövers unter Verwendung einer aktiven Parkhilfe oder einer Anhängerrückfahrhilfe steuert. Die Steuerung basiert dabei auf vorhergehenden Geschwindigkeitsprofilen an einem Ort, an welchem dasselbe Parkhilfesystem vorher aktiviert war.

Die DE 10 2010 023 162 A1 betrifft ein Verfahren zum Unterstützen eines Fahrers eines Kraftfahrzeugs beim Einparken in eine Parklücke, bei welchem in einem Lernmodus der Fahrerassistenzeinrichtung Referenzdaten über einen Umgebungsbereich und eine Referenzzielposition, welche im Lernmodus durch das Kraftfahrzeug erreicht wird, erfasst und abgespeichert werden. Diese Referenzdaten und Referenzzielposition werden dann in einem nachfolgenden, von dem Lernmodus unterschiedlichen Betriebsmodus der Fahrerassistenzeinrichtung für ein Unterstützen des Fahrers bei dem Einparken in dieselbe Parklücke genutzt.

Des Weiteren ist aus der DE 10 2014 013 219 A1 ein Assistenzsystem zum Rangieren eines Gespanns mit einem Zugfahrzeug und einem gelenkig an das Zugfahrzeug gekoppelten Anhänger bekannt, bei welchem das Assistenzsystem eine Mehrzahl von auswählbaren Fahrmanövern mit unterschiedlichen Trajektorien aufweist, entlang denen das Gespann mittels des Assistenzsystems bewegbar ist. Das Assistenzsystem stellt dabei einer bedienenden Person wenigstens eines der Fahrmanöver zur Auswahl bereit. Die DE 10 2012 022 816 A1 betrifft ein Verfahren und eine Vorrichtung zur Steuerung eines Rückraumüberwachungssystems einer Fahrzeugkombination bestehend aus einem ziehenden Fahrzeug und einem gezogenen Fahrzeug, wobei das Rückraumüberwachungssystem an dem ziehenden Fahrzeug angeordnet ist und bei einem Erkennen des angekuppelten Zustands des gezogenem Fahrzeugs an dem ziehenden Fahrzeug automatisch deaktiviert wird.

Die US 2016/129939 A1 ist als nächstliegender Stand der Technik zu sehen und zeigt ein Fahrzeugsteuerungssystem zum Steuern eines Fahrzeugs, um einen Einparkvorgang mit einem Anhänger durchzuführen. Das Fahrzeug umfasst einen Prozessor, der dazu eingerichtet ist, eine Zielparklücke zu bestimmen, wobei die aktuelle Position des Anhängers mit Hilfe des Prozessors bestimmt wird und eine Zielroute von der aktuellen Position zu der Zielparklücke bestimmt wird. Der Prozessor ist weiter dazu eingerichtet, ein Fahrzeugsteuersignal auszugeben, um den Anhänger entlang der Zielroute zu führen.

Es stellt sich die Aufgabe, einem Fahrer eines Kraftfahrzeugs mit einem angehängten Anhänger ein Einparken in eine Parklücke zu vereinfachen.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Die Erfindung betrifft ein Verfahren zum Unterstützen eines Fahrers eines Kraftfahrzeugs mit einem angehängten Anhänger bei einem Einparken des Kraftfahrzeugs mit dem Anhänger in eine Parklücke mit Hilfe oder Unterstützung einer Fahrerassistenzeinrichtung des Kraftfahrzeugs. Das Kraftfahrzeug mit dem angehängten Anhänger kann dabei auch als Gespann bezeichnet werden. Dabei umfasst das Verfahren eine Reihe von Schritten. Ein Schritt ist ein Bestimmen oder Ermitteln von zumindest einer Gesamtabmessung des Kraftfahrzeugs mit dem angehängten Anhänger, also des Gespanns, in Abhängigkeit zumindest einer vorgegebenen Abmessung des Anhängers durch eine Recheneinrichtung der Fahrerassistenzeinrichtung. Die Gesamtabmessung kann beispielsweise eine Länge wie eine sogenannte "Länge über alles" umfassen. Sie kann beispielsweise aber auch weitere Eigenschaften des Gespanns umfassen, zum Beispiel eine von dem Gespann eingenommene Grundfläche. Diese Grundfläche kann dann insbesondere durch ein Rechteck oder ein Rechteck mit gekrümmten, parallel verlaufenden Seiten beschrieben werden. Die vorgegebene Abmessung des Anhängers kann beispielsweise eine Länge und/oder eine Breite und/oder einen Anhängewinkel des Anhängers umfassen. Der Anhängewinkel kann dabei durch den Winkel zwischen einer Längsachse des Anhängers und einer Längsachse des Kraftfahrzeugs bestimmt oder vorgegeben sein.

Ein weiterer Schritt ist das Erfassen von Umgebungsdaten über eine Parklücke in einer Umgebung des Kraftfahrzeugs durch eine dem Kraftfahrzeug zugeordnete Sensoreinrichtung der Fahrerassistenzeinrichtung. Die Sensoreinrichtung kann beispielsweise einen oder mehrere Ultraschallsensoren oder einen oder mehrere Laserscanner umfassen. Mit dem Erfassen von Umgebungsdaten über die Parklücke können insbesondere auch Umgebungsdaten über zumindest eine Grenze oder Begrenzung der Parklücke erfasst werden. Dabei kann die Grenze oder Begrenzung der Parklücke insbesondere ein Objekt in der Umgebung der Parklücke umfassen, welches die Parklücke begrenzt. Ein weiterer Schritt ist das Einparken des Kraftfahrzeugs mit dem angehängten Anhänger in die Parklücke. Das Einparken kann hier manuell durch den Fahrer oder zumindest durch den Fahrer manuell unterstützt erfolgen.

Bei dem Einparken befindet sich die Parklücke, insbesondere zumindest die erfasste Grenze oder Begrenzung der Parklücke, zumindest teilweise außerhalb eines aktuellen Erfassungsbereiches der Sensoreinrichtung des Kraftfahrzeugs. Unter dem aktuellen Erfassungsbereich kann hier ein zu einem augenblicklichen Zeitpunkt definierter oder gegebener Erfassungsbereich der Sensoreinrichtung verstanden werden. Es befindet sich also bei dem Einparken zumindest zeitweise, bevorzugt über den gesamten Einparkvorgang hinweg, zumindest ein Teilbereich der Parklücke oder ein Teilbereich der Grenze oder Begrenzung der Parklücke außerhalb einer durch die Fahrerassistenzeinrichtung mittels der Sensoreinrichtung erfassbaren Umgebung des Kraftfahrzeugs.

In Abhängigkeit von einer Position des Kraftfahrzeugs relativ zur Begrenzung oder Grenze der Parklücke und von der Gesamtabmessung des Kraftfahrzeugs mit dem angehängten Anhänger wird nun durch die Recheneinrichtung bei dem Einparken zumindest ein Abstand von dem Anhänger zu einer Grenze der Parklücke, insbesondere zu einem statischen Objekt in der Umgebung der Parklücke, welche die Parklücke begrenzt, bestimmt oder ermittelt. Dieses Bestimmen oder Ermitteln erfolgt dabei bevorzugt zumindest zeitweise in der Zeitphase des Schrittes c1), also während zumindest ein Teilbereich der Parklücke außerhalb der durch die Sensoreinrichtung erfassbaren Umgebung des Kraftfahrzeugs liegt. Es sind somit aktuell in der Position, in welcher der Abstand von dem Anhänger zu der Parklücke ermittelt wird durch die Sensoreinrichtung des Kraftfahrzeugs nur unvollkommene oder unvollständige Umgebungsdaten über die Parklücke erfassbar. Aus den aktuell erfassbaren und somit unvollkommenen Umgebungsdaten lassen sich die geometrischen Abmessungen der Parklücke, d.h. Informationen über eine oder mehrere Grenzen beziehungsweise Begrenzungen der Parklücke, aus welchen die für das Einparken erforderlichen geometrischen Abmessungen der Parklücke ableitbar sind, nicht ableiten oder berechnen. Die Position des Kraftfahrzeugs kann dabei eine Orientierung des Kraftfahrzeugs umfassen. Insbesondere ist die Position durch eine PositionsErfassungseinrichtung der Fahrerassistenzeinrichtung erfassbar. Alternativ oder ergänzend kann die Position und die Orientierung auch über die erfassten Umgebungsdaten oder mittels einer Odometrie, also aus Daten eines Antriebssystems des Kraftfahrzeugs, bestimmt werden.

Bei dem ermittelten Abstand kann es sich insbesondere um einen minimalen oder geringsten Abstand handeln, welcher aus einer Mehrzahl von Abständen zwischen dem Gespann in einer jeweiligen, an dem Gespann oder einer Gesamt-Kontur des Gespanns angeordneten Zone und einer oder mehreren Grenzen der Parklücke durch die Recheneinrichtung bestimmt oder ermittelt wird. Der ermittelte Abstand kann dabei auch ein gerichteter Abstand sein, welcher von der Grenze der Parklücke zu dem Anhänger in Richtung einer Innenseite der Parklücke definiert oder gegeben ist oder gemessen wird. Der ermittelte Abstand kann somit dazu dienen, ein Überfahren der Grenze der Parklücke oder ein Herausfahren von einem Inneren der Parklücke aus der Parklücke heraus zu vermeiden. Falls der ermittelte Abstand kleiner ist als ein vorgegebener Mindestabstand wird dabei durch die Fahrerassistenzeinrichtung, insbesondere durch eine Ausgabeeinrichtung oder Anzeigeeinrichtung, ein Warnhinweis an den Fahrer ausgegeben. Bei dem Warnhinweis kann es sich um einen optischen und/oder akustischen und/oder haptischen Warnhinweis handeln.

Damit kann dem Fahrer des Kraftfahrzeugs bei dem Einparken mit dem angehängten Anhänger, insbesondere bei einem rückwärtigen Einparken, ein Abstandswarnsystem zur Verfügung gestellt werden, bei welchem ähnlich der von Kraftfahrzeugen ohne Anhänger bekannten Abstandswarnsystemen über "virtuelle Sensoren" oder "virtuelle Abstandssensoren" in einer oder mehreren Zonen an dem Gespann der Abstand ermittelt werden kann. Das hat den Vorteil, dass der Fahrer gewarnt wird, falls durch das Gespann, insbesondere dem angehängten Anhänger, der Mindestabstand zu einem Hindernis oder einer Grenze der Parklücke erreicht wird. Dabei ist seitens des Anhängers keine entsprechende Sensoreinrichtung erforderlich, sodass, eine Kenntnis über die vorgegebenen oder vorgebbaren Abmessungen des Anhängers vorausgesetzt, der Fahrer unabhängig von der Art oder technischen Merkmalen des angehängten Anhängers bei dem Einparken unterstützt werden kann. Damit wird ein kollisionsträchtiges und gefährliches Überfahren von Grenzen der Parklücke verhindert, obwohl sich eine Rückseite des Anhängers außerhalb des Erfassungsbereiches der Sensoreinrichtung und möglicherweise außerhalb eines Sichtbereiches des Fahrers befindet. Auch ohne ein Einweisen durch Dritte, wie es leider gerade bei privaten Fahrzeugen mit einem einzigen Fahrer ohne Beifahrer oft vorkommt wird, so bei einem Einparken mit angehängten Anhänger eine Unfallgefahr auf einfache und angenehme Weise reduziert und das Einparken vereinfacht, sodass beispielsweise der Fahrer weniger oft aussteigen und einen noch vorhandenen Abstand zu einer Grenze der Parklücke, beispielsweise einem weiteren Objekt wie einem parkenden weiteren Kraftfahrzeug, überprüfen muss.

Es ist dabei vorgesehen, dass das Bestimmen der Gesamtabmessung bei dem Einparken gemäß Schritt c) erfolgt. Das Bestimmen erfolgt fortlaufend. Dabei wird die Gesamtabmessung des Gespanns in Abhängigkeit des Anhängewinkels des Anhängers bestimmt. Der Anhängewinkel kann dabei wie oben beschrieben durch eine Stellung der beiden Längsachsen von Anhänger und Kraftfahrzeug zueinander bestimmt sein. Somit kann, beispielsweise wenn eine Länge als Gesamtabmessung des Gespanns betrachtet wird, diese besonders genau für die jeweils aktuelle Situation bei dem Einparken bestimmt werden, sodass Genauigkeit und Zuverlässigkeit des Verfahrens erhöht wird. Da sich der Anhängewinkel naturgemäß während eines Einparkens ändert, kann sich nämlich auch eine Gesamtabmessung, beispielsweise die Länge, aber auch eine Breite des Gespanns während des Einparkens wiederholt ändern. Über die fortlaufende Ermittlung der Gesamtabmessung unter Berücksichtigung des Anhängewinkels kann die Gesamtabmessung somit besonders genau bestimmt werden und die Zuverlässigkeit des Verfahrens und der Komfort des Fahrers erhöht werden.

In einer bevorzugten Ausführungsform ist vorgesehen, dass die vorgegebene Abmessung des Anhängers, die auch eine vorgegebene Kinematik des Anhängers umfassen kann, eine vorab in der Fahrerassistenzeinrichtung abgespeicherte Abmessung ist. Insbesondere kann die vorgegebene oder vorgebbare Abmessung dabei durch den Fahrer aus mehreren abgespeicherten Abmessungen auswählbar sein bzw. ausgewählt werden. Es kann hier auch eine freie Eingabe der zumindest einen Abmessung des Anhängers vorgesehen sein. Beispielsweise kann eine Länge und/oder Breite und/oder Achsposition des Anhängers frei eingeben werden. Die Kinematik des Anhängers, also sein Verhalten bei einer Bewegung, wird dabei entscheidend durch die Achsposition des Anhängers, also beispielsweise durch einen Abstand einer Anhängerachse von einer Anhängekupplung bestimmt. Das hat den Vorteil, dass auf einfache und übersichtliche Weise eine sehr genaue Abmessung oder Kinematik von der Fahrerassistenzeinrichtung genutzt werden kann. Damit kann auch die Trajektorie des Gespanns beziehungsweise der ermittelte Abstand des Gespanns oder des Anhängers zu der Grenze der Parklücke mit einer besonders großen Genauigkeit bestimmt werden. Das zieht eine erhöhte Betriebssicherheit nach sich und vereinfacht das Einparken für den Fahrer ebenfalls.

In einer alternativen Ausführungsform kann hier vorgesehen sein, dass die zumindest eine vorgegebene Abmessung, insbesondere inklusive der vorgegebenen Kinematik, während eines Fahrvorgangs des Kraftfahrzeugs mit dem Anhänger und/oder während des Einparkens des Kraftfahrzeugs mit dem Anhänger iterativ über ein Messen von unterschiedlichen Lenkwinkeleinschlägen des Kraftfahrzeugs und von jeweils zugehörigen Veränderungen des Anhängewinkels relativ zu dem Kraftfahrzeug bestimmt wird. Dies kann beispielsweise mit einem Verfahren wie es in der DE 10 2014 107 917 A1 beschrieben ist realisiert werden. Das hat den Vorteil, dass der Fahrer ohne eine Kenntnis über die Abmessungen oder die Kinematik des Anhängers von dem beschriebenen Verfahren profitieren kann und dennoch der ermittelte Abstand auf den jeweils angehängten Anhänger abgestimmt wird. Überdies wird so auch die Eingabe oder Auswahl des Fahrers als mögliche Fehlerquelle eliminiert und die Einfachheit und Zuverlässigkeit des Verfahrens erhöht.

In einer weiteren vorteilhaften Ausführungsform ist vorgesehen, dass das Einparken gemäß Schritt c) zumindest teilautomatisiert, insbesondere hochautomatisiert oder vollautomatisiert erfolgt. Die Fahrerassistenzeinrichtung kann hier also eine Längs- und/ oder Quersteuerung, das heißt einen Vor- und Rücktrieb und/oder eine Lenkung des Kraftfahrzeugs steuern. Gerade bei einem zumindest teilautomatisierten Einparken ist das beschriebene Verfahren vorteilhaft, da so trotz der unvollkommenen oder unvollständigen Umgebungsdaten dem Fahrer ein mühevolles Einparken mit dem Anhänger erleichtert oder erspart wird. Durch das Berechnen oder Ermitteln des ermittelten Abstandes kann so möglicherweise ein teil-, bzw. voll- oder hochautomatisiertes Einparken in der beschriebenen Situation, bei welcher ein Teil des Parklücke der Sensoreinrichtung des Kraftfahrzeugs nicht zugänglich ist, überhaupt erst realisiert werden. Dabei reduziert sich die Aufgabe an den Fahrer auf ein Überwachen des Einparkens, welches durch den beschriebenen Warnhinweis erleichtert wird.

In einer anderen vorteilhaften Ausführungsform ist vorgesehen, dass das Erfassen gemäß Schritt b) mehrere aufeinanderfolgende Einzel-Erfassungsschritte umfasst, wobei in jedem Einzel-Erfassungsschritt Einzelumgebungsdaten über unterschiedliche Einzelbereiche der Parklücke erfasst werden. Dabei repräsentieren die Einzelumgebungsdaten die Parklücke jeweils nur unvollständig. Die Einzelumgebungsdaten repräsentieren also jeweils nur einen Teilbereich der Parklücke oder einen Teilbereich einer Grenze oder Begrenzung der Parklücke. Die Parklücke liegt somit bei jedem Einzelerfassungsschritt jeweils teilweise außerhalb des jeweils aktuellen in (Einzel-)Erfassungsbereiches der Sensoreinrichtung, in welchem die Einzelumgebungsdaten erfasst werden. Aus den Einzelumgebungsdaten sind dabei insbesondere die oben beschriebenen Umgebungsdaten der Parklücke ableitbar, welche die Parklücke mit für einen Einparkvorgang hinreichenden Informationen oder einer hinreichenden Vollständigkeit repräsentieren. Insbesondere kann unter einer hinreichenden Repräsentation also eine Repräsentation verstanden werden, welche eine Länge und eine Breite der Parklücke und damit der zu beparkenden Parkfläche repräsentiert.

Somit kann ermöglicht werden, dass die Umgebungsdaten über die Parklücke diese Parklücke für ein Einparken des Kraftfahrzeugs, insbesondere zumindest teilautomatisiertes Einparken des Kraftfahrzeugs, hinreichend genau repräsentieren, obwohl die Parklücke zu keinem Zeitpunkt vollständig im Erfassungsbereich der Sensoreinrichtung Kraftfahrzeugs liegt. Damit können auch besonders große Parklücken durch die Umgebungsdaten repräsentiert werden, was gerade für ein Einparken mit einem angehängten Anhänger vorteilhaft ist. Die Einzel-Umgebungsdaten, aus welchen sich die Umgebungsdaten für die gesamte Parklücke zusammensetzen, können dabei einen unterschiedlichen Zeitrang oder eine unterschiedliche Aktualität aufweisen. Damit können beispielsweise wenn ein Kraftfahrzeug mit einem angehängten Anhänger an einer langen Parklücke vorbeifährt die zu Anfang des Vorbeifahrens erfassten Einzel-Umgebungsdaten mit den am Ende des Vorbeifahrens erfassten Umgebungsdaten kombiniert werden, um die Parklücke durch die kombinierten Umgebungsdaten vollständig zu repräsentieren. Auch dies erleichtert das Einparken mit einem angehängten Anhänger für den Fahrer, da so die Unterstützungsfunktion der Fahrerassistenzeinrichtung nicht auf Situationen beschränkt ist, in welcher Umgebungsdaten über eine Parklücke mit einem einmaligen Erfassen vollständig erfasst werden können.

In einer weiteren, besonders bevorzugten Ausführungsform ist vorgesehen, dass in Abhängigkeit von den erfassten Umgebungsdaten, von der vorgegebenen Abmessung des Anhängers mit dem Anhängewinkel und von der Position des Kraftfahrzeugs durch das Fahrerassistenzsystem eine Karte erzeugt wird, welche die Parklücke und das Kraftfahrzeug mit, also inklusive dem angehängten Anhänger repräsentiert. Die Karte kann dabei insbesondere auch weitere Objekte, beispielsweise Kraftfahrzeuge, welche bevorzugt auch die Parklücke begrenzende Objekte bzw. Kraftfahrzeuge sind, repräsentieren. Die Abmessung des Anhängers umfasst somit einen Anhängewinkel oder der Anhängewinkel wird in Ergänzung zu der vorgegebenen Abmessung berücksichtigt. Beispielsweise kann der Anhängewinkel aus der Kinematik des Anhängers und/oder mittels Abstandssensoren des Fahrerassistenzsystems, welche an einem Fahrzeugheck angeordnet sind, bestimmt oder ermittelt werden. Insbesondere kann hier der Abstand von dem Anhänger zu der Grenze der Parklücke anhand der Karte bestimmt oder ermittelt werden. Das hat den Vorteil, dass, beispielsweise unter Verwendung odometrischer Methoden, die Karte und somit die Relation des Gespanns zu der Parklücke und Grenzen der Parklücke auf besonders einfache Weise zeitlich aktuell repräsentiert werden kann. Auch können bekannte Methoden aus der Bildverarbeitung angewendet werden, um auf einfache Weise den (insbesondere geringsten) Abstand zwischen Anhänger und Grenze der Parklücke zu bestimmen. Das Bestimmen dieses Abstandes kann somit beispielsweise geometrisch und damit auf eine besonders einfache Art und Weise realisiert werden. Damit wird ein Rechenaufwand reduziert und somit auch in Kraftfahrzeugen geringer Rechenkraft in einer Recheneinrichtung der Komfort des unterstützten Einparkens erhöht.

In einer besonders vorteilhaften Ausführungsform ist dabei vorgesehen, dass in der Karte eine Gesamt-Kontur für das Kraftfahrzeug mit dem angehängten Anhänger festgelegt wird und in Abhängigkeit der erfassten Umgebungsdaten für einen Umgebungsbereich des Anhängers, welcher außerhalb des Erfassungsbereiches der Sensoreinrichtung des Kraftfahrzeugs liegt, zumindest eine an die Gesamt-Kontur im Bereich des Anhängers angrenzende Zone festgelegt wird, für welche der Abstand zwischen Anhänger und Grenze der Parklücke bestimmt oder ermittelt wird. Bevorzugt werden dabei mehrere an die Gesamt-Kontur im Bereich des Anhängers angrenzende Zonen festgelegt, für welche dann jeweils ein solcher Abstand zu der Grenze der Parklücke bestimmt oder ermittelt wird. Insbesondere umrandet die Gesamt-Kontur dabei das Kraftfahrzeug inklusive des angehängten Anhängers. Somit kann für die Zone oder die Zonen ein jeweiliger "virtueller Abstandssensor" realisiert oder implementiert werden, da jeweils für die unterschiedlichen Zonen der Abstand berechnet werden kann - genau so, als ob tatsächlich in der entsprechenden Zone ein Abstandssensor vorhanden wäre, welcher aktuell einen Abstand zwischen dem Anhänger oder einem Rand der Gesamt-Kontur und der Grenze der Parklücke erfassen würde. Es kann somit für den Fahrer für jegliche, frei wählbare Anhänger, für welche zumindest eine Abmessung des Anhängers in der Fahrerassistenzeinrichtung hinterlegt ist, ein Einparken unterstützt werden, bei welchem die heutzutage übliche und damit dem Fahrer wohlbekannte Funktionsweise von Abstandssensoren, welche beispielsweise seitlich oder an einer Heckseite des Kraftfahrzeugs angeordnet sind, imitiert wird. Damit wird ein besonders einfaches Einparken mit dem Anhänger realisiert, welches sich an dem dem Fahrer aus dem einzelnen Kraftfahrzeug vertrauten Parkhilfe-Mechanismus orientiert.

In einer weiteren Ausführungsform ist dabei vorgesehen, dass die Position des Anhängers, welche insbesondere auch eine Orientierung des Anhängers umfasst, in der Karte mittels einer Odometrie oder odometrisch bestimmt wird. Insbesondere kann die Position des Anhängers dabei in Abhängigkeit eines Lenkwinkels des Kraftfahrzeugs und/oder des Anhängewinkels des Anhängers bestimmt oder ermittelt werden. Das hat den Vorteil, dass gerade bei kleinen Bewegungen des Kraftfahrzeugs, welche typischerweise über eine Positionserfassungseinrichtung wie ein globales Positionierungssystem nur schwer fassbar sind, bereits in der Karte berücksichtigt werden können. Die Odometrie ist hier insofern besonders vorteilhaft, als dass so auch für den Anhänger ohne dass dieser über Abstandssensoren verfügt die Position auf der Karte in großer Genauigkeit bestimmt werden kann. Dies erhöht Zuverlässigkeit und Genauigkeit des Verfahrens, sodass für den Fahrer der Komfort erhöht ist und das Einparken weiter vereinfacht wird.

In einer besonders bevorzugten Ausführungsform ist dabei vorgesehen, dass die Karte dem Fahrer über eine Anzeigeeinrichtung der Fahrerassistenzeinrichtung angezeigt wird. Dies kann beispielsweise in einer Vogelperspektive erfolgen. Der Fahrer kann so einen verbesserten Überblick über das Gespann und die relative Position und Orientierung von Kraftfahrzeug und Anhänger zu der Parklücke und zu die Parklücke begrenzenden Objekten erhalten. Die visuelle Darstellung über eine Anzeigeeinrichtung ist hier besonders komfortabel und einfach.

In einer weiteren Ausführungsform ist vorgesehen, dass in Abhängigkeit des ermittelten Abstandes von dem Anhänger zu der Grenze der Parklücke , insbesondere eines Unterschieds zwischen dem ermittelten Abstand und dem vorgegebenen Mindestabstand, mehrere Warnhinweise an den Fahrer ausgegeben werden können. Beispielsweise können so bei einer Annäherung an eine Grenze der Parklücke, bei welchem der ermittelte Abstand sich nach und nach dem vorgegebenen Mindestabstand annähert immer auffälligere inkrementelle Warnungen genutzt werden, wie sie beispielsweise auch für Parkhilfen mit heckseitigen Abstandssensoren aus einzelnen Kraftfahrzeugen ohne Anhänger bekannt sind realisiert werden. Alternativ oder ergänzend kann auch bei einem Überschreiten des Mindestabstandes durch den ermittelten Abstand, bei welchem der ermittelte Abstand den Mindestabstand immer weiter überschreitet immer auffälligere inkrementelle Warnungen genutzt werden. Insbesondere können hier bei einem Vorhandensein von mehreren der oben beschriebenen Zonen gleichzeitig unabhängig voneinander für die verschiedenen Zonen visuelle Warnhinweise über die Anzeigeeinrichtung angezeigt werden. Damit wird auf besonders einfache Weise dem Fahrer ein Überblick über die jeweilige Einparksituation verschafft, was das Einparken weiter erleichtert.

In einer anderen vertrauten Ausführungsform ist vorgesehen, dass das Einparken unabhängig von Sensordaten, welche durch eine Sensoreinrichtung des Anhängers erfassbar sind, durchgeführt wird. Insbesondere verfügt der Anhänger also nicht über eine entsprechende Sensoreinrichtung, welche Abstandsdaten zu der Grenze der Parklücke oder Umgebungsdaten bereitstellt, aus welchen sich die Abstandsdaten ableiten ließen. Das hat den Vorteil, dass an den Anhänger keinerlei technische oder technologische Voraussetzungen gestellt werden müssen, um das hier beschriebene Verfahren zum vereinfachten Einparken mit dem Anhänger umzusetzen.

Die Erfindung betrifft auch eine Fahrerassistenzeinrichtung zum Unterstützen eines Fahrers eines Kraftfahrzeugs mit einem angehängten Anhänger bei einem Einparken des Kraftfahrzeugs mit dem Anhänger in eine Parklücke. Die Fahrerassistenzeinrichtung weist dabei eine Recheneinrichtung auf, die ausgelegt ist, zumindest eine Gesamtabmessung des Kraftfahrzeugs mit dem angehängten Anhänger in Abhängigkeit zumindest einer vorgegebenen Abmessung des Anhängers zu bestimmen. Des Weiteren umfasst die Fahrerassistenzeinrichtung eine Sensoreinrichtung, die ausgelegt ist, Umgebungsdaten über eine Parklücke in einer Umgebung des Kraftfahrzeugs zu erfassen. Die Fahrerassistenzeinrichtung ist dabei ausgelegt, bei einem Einparken des Kraftfahrzeugs mit dem angehängten Anhänger in die Parklücke, bei welchem sich die Parklücke zumindest teilweise außerhalb eines aktuellen Erfassungsbereiches der Sensoreinrichtung des Kraftfahrzeugs befindet, einen Warnhinweis an den Fahrer auszugeben, falls zumindest ein ermittelter Abstand von dem Anhänger zu einer Grenze der Parklücke, welcher durch die Recheneinrichtung in Abhängigkeit einer Position des Kraftfahrzeugs relativ zu der Parklücke und in Abhängigkeit der Gesamtabmessung des Kraftfahrzeugs mit dem angehängten Anhänger bestimmt ist, kleiner ist als ein vorgegebener Mindestabstand, wobei die Recheneinrichtung dazu eingerichtet ist, das Bestimmen der Gesamt-Abmessung fortlaufend und in Abhängigkeit eines Anhängewinkels des Anhängers zu bestimmen.

Vorteile und vorteilhafte Ausführungsformen der Fahrerassistenzeinrichtung entsprechen hier Vorteilen und vorteilhaften Ausführungsformen des Verfahrens und umgekehrt.

In einer vordersten Ausführungsform kann dabei vorgesehen sein, dass die Sensoreinrichtung einen Laserscanner zum Erfassen der Umgebungsdaten über die Parklücke in der Umgebung des Kraftfahrzeugs aufweist. Das hat den Vorteil, dass eine Parklücke in einer besonders großen Umgebung des Kraftfahrzeugs erfasst werden kann. Insbesondere kann so eine im Vergleich zu einer Sensoreinrichtung mit einem Ultraschallsensor zum Erfassen von Umgebungsdaten größeren Umgebung des Kraftfahrzeugs erfasst werden.

Die Erfindung betrifft ein Kraftfahrzeug mit einer Fahrerassistenzeinrichtung nach einer oder mehreren genannten Ausführungen.

Ausführungsbeispiele der Erfindung werden nachfolgend anhand schematischer Zeichnungen näher erläutert. Es zeigen:
- Fig. 1: ein beispielhaftes Szenario für ein Längsparken in einem ersten Stadium, anhand dessen eine beispielhafte Ausführungsform eines Verfahrens zum Unterstützen eines Einparkens eines Kraftfahrzeugs mit einem Anhänger in eine Parklücke erläutert wird;
- Fig. 2: das beispielhafte Szenario aus Fig. 1 in einem fortgeschrittenen Stadium des Einparkens;
- Fig. 3: ein beispielhaftes Szenario für ein Querparken in einem ersten Stadium, anhand dessen eine beispielhafte Ausführungsform eines Verfahrens zum Unterstützen eines Einparkens eines Kraftfahrzeugs mit einem Anhänger in eine Parklücke erläutert wird; sowie
- Fig. 4: das beispielhafte Szenario aus Fig. 3 in einem fortgeschrittenen Stadium des Einparkens.

In den Figuren werden gleiche oder funktionsgleiche Elemente mit den gleichen Bezugszeichen versehen.

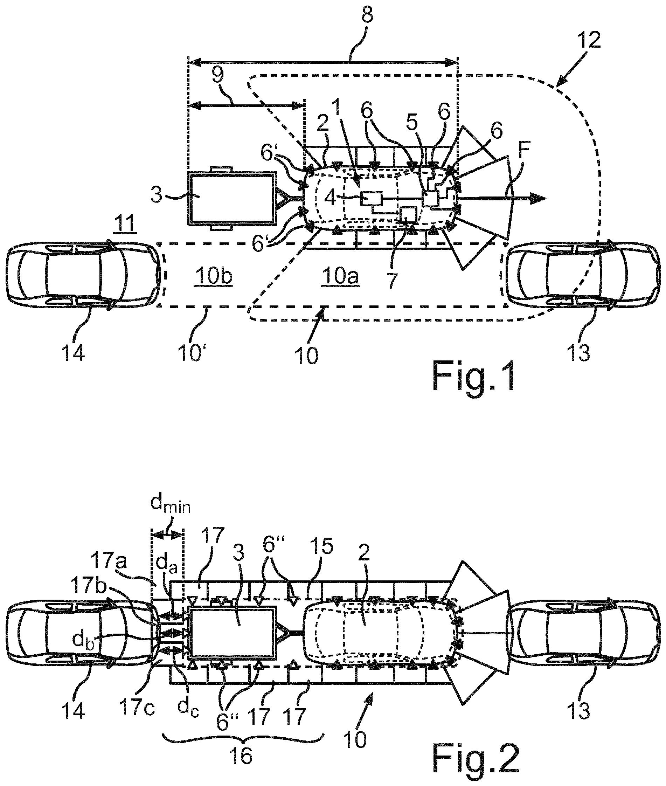

Fig. 1 zeigt ein beispielhaftes Szenario für ein Längsparken in einem ersten Stadium. Dargestellt ist das beispielhafte Szenario vorliegend aus einer Vogelperspektive, wie es in ähnlicher Weise auch einem Fahrer eines Kraftfahrzeugs 2 mit einer Fahrerassistenzeinrichtung 1 auf einer Anzeigeeinrichtung 7 der Fahrerassistenzeinrichtung 1 angezeigt werden könnte. An das Kraftfahrzeug 2 ist im gezeigten Beispiel ein Anhänger 3 heckseitig an das Kraftfahrzeug 2 angehängt. Die Fahrerassistenzeinrichtung 1 weist im gezeigten Beispiel eine Recheneinrichtung 4, eine Sensoreinrichtung 5 sowie die Anzeigeeinrichtung 7 auf. Die Recheneinrichtung 4 ist dabei ausgelegt, zumindest eine Gesamtabmessung 8, bei der es sich beispielsweise um eine Länge des Kraftfahrzeugs 1 mit dem Anhänger 3 über alles, also um eine Gesamtlänge des Gespanns handeln kann, in Abhängigkeit zumindest einer vorgegebenen Abmessung 9 des Anhängers 3, vorliegend einer Länge des Anhängers 3 über alles zu bestimmen oder zu ermitteln. Die Sensoreinrichtung 5 ist dabei ausgelegt, Umgebungsdaten über eine Parklücke 10 in einer Umgebung 11 des Kraftfahrzeugs 2 zu erfassen. Zu diesem Zweck weist die Sensoreinrichtung 5 vorliegend eine Vielzahl von Sensoren 6, die hier als Abstandssensoren ausgeführt sind, auf. Die Sensoren 6 sind dabei vorliegend an einer Fahrzeugfront sowie einem Fahrzeugheck des Kraftfahrzeugs 2 sowie seitlich an dem Kraftfahrzeug 2 angeordnet.

Aus Gründen der Übersichtlichkeit ist hier nur eine beispielhafte Auswahl der Sensoren 6 tatsächlich mit der Sensoreinrichtung 5 gekoppelt und somit als Teil derselben eingezeichnet. Selbstverständlich sind in dieser Ausführungsform sämtliche Sensoren 6 Teil der Sensoreinrichtung 5. Dabei sind im gezeigten Beispiel die heckseitig angeordneten Abstandssensoren 6' deaktiviert. Die Sensoren 6 sind bevorzugt als Laserscanner ausgeführt oder können gegebenenfalls durch einen oder mehrere Laserscanner ersetzt werden, es kann sich jedoch alternativ beispielsweise um Ultraschallsensoren handeln. Durch die nun bei dem Einparken von der Sensoreinrichtung 5 zum Erfassen von Umgebungsdaten über die Parklücke 10 genutzten Sensoren 6 lässt sich somit die Umgebung 11 des Kraftfahrzeugs 2 innerhalb eines aktuellen Erfassungsbereiches 12 der Sensoreinrichtung 5 abtasten und entsprechende Umgebungsdaten erfassen. Vorliegend ist die Parklücke 10 in der aktuellen, gezeigten Situation in einem ersten Teilbereich 10a innerhalb des aktuellen Erfassungsbereiches 12 und in einem zweiten Teilbereich 10b außerhalb des aktuellen Erfassungsbereiches 12 der Sensoreinrichtung 5.

Die Fahrerassistenzeinrichtung 1 zum Unterstützen eines Fahrers des Kraftfahrzeugs 2 mit dem angehängten Anhänger 3 in die Parklücke 10 ist nun ausgelegt, bei dem Einparken des Kraftfahrzeugs 1 inklusive des Anhängers 3, also bei dem Einparken des Gespannes in die Parklücke 10 einen Warnhinweis an den Fahrer auszugeben, falls zumindest ein Abstand dₐ, d_{b}, d_{c} (Fig. 2) von dem Anhänger 3 zu einer Grenze 10' der Parklücke 10 kleiner ist als ein vorgegebener Mindestabstand dₘᵢₙ (Fig.2). Der Abstand dₐ, d_{b}, d_{c} (Fig. 2) wird dabei durch die Recheneinrichtung 4 in Abhängigkeit einer Position des Kraftfahrzeugs 2 relativ zu der Parklücke 10 und/oder der Grenze 10' und in Abhängigkeit der Gesamtabmessung 8 des Kraftfahrzeugs 2 mit dem angehängten Anhänger 3 ermittelt oder bestimmt.

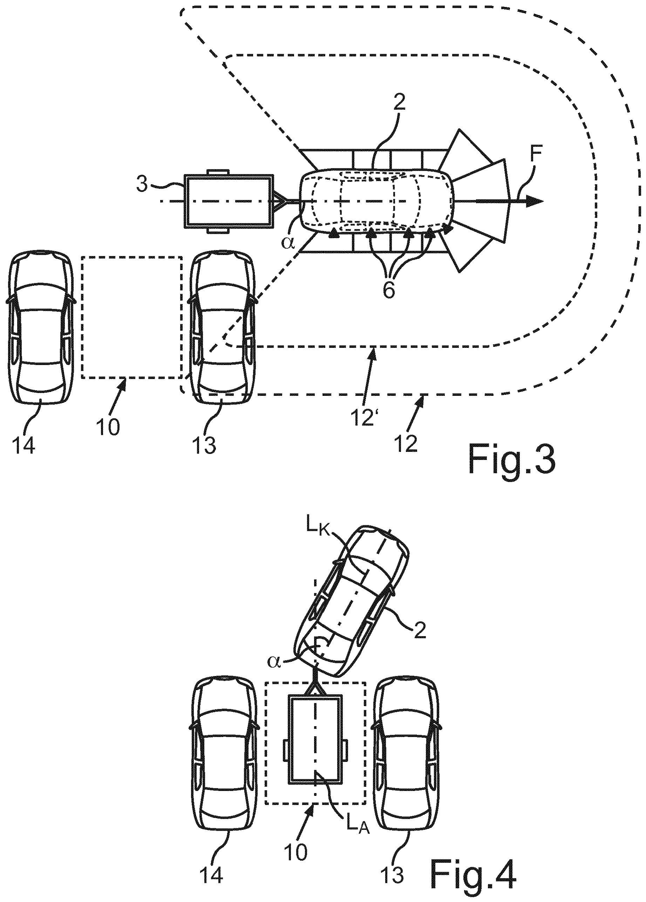

Der Warnhinweis kann beispielsweise ein akustischer Warnhinweis sein. Der Warnhinweis kann aber auch ein optischer Warnhinweis sein, der vorliegend über die vorliegend als Teil der Fahrerassistenzeinrichtung 1 vorhandene Anzeigeeinrichtung 7 beispielsweise über einen Bildschirm angezeigt wird. Im gezeigten Beispiel wird die Anzeigeeinrichtung 7 mit dem Bildschirm auch genutzt, um dem Fahrer eine Karte, welche von dem Fahrerassistenzsystem 1 in Abhängigkeit der erfassten Umgebungsdaten, der vorgegebenen Abmessung 9 des Anhängers 3 mit einem Anhängewinkel α (Fig. 4) und der Position des Kraftfahrzeugs 2 erzeugt wird. Der Anhängewinkel α (Fig. 4) kann dabei durch einen Winkel zwischen einer Längsachse L_{K} (Fig. 4) des Kraftfahrzeugs 2 und einer Längsachse L_{A} (Fig. 4) des Anhängers 3 bestimmt oder definiert sein. Diese Karte repräsentiert beispielsweise die Parklücke 10 sowie das Kraftfahrzeug 2 mit dem angehängten Anhänger 3 in der aktuellen Position des Kraftfahrzeugs 2, welche eine Orientierung von Kraftfahrzeug 2 und Anhänger 3 zueinander und zu der Parklücke vorliegend repräsentiert oder darstellt. In der Karte können auch weitere Objekte 13, 14 repräsentiert und dargestellt sein, welche beispielsweise wie vorliegend die beiden als weitere Kraftfahrzeuge ausgeführten Objekte 13, 14 die Parklücke 10 begrenzen. Die Karte kann dem Fahrer des Kraftfahrzeugs 2 also einen ähnlichen Überblick über ein Szenario bieten wie vorliegend die hier gezeigten Figuren.

In dem dargestellten Szenario fährt nun das Kraftfahrzeug 2 mit aktivierter Fahrerassistenzeinrichtung 1 zunächst in einer Fahrtrichtung F an der Parklücke 10 vorbei. In der Darstellung ist nun das Kraftfahrzeug 2 bereits teilweise an der Parklücke 10 vorbeigefahren, sodass sich der Teilbereich 10b der Parklücke 10 außerhalb des aktuellen Erfassungsbereiches 12 der Sensoreinrichtung 5 befindet. Da jedoch zuvor, in einem früheren und vorliegend nicht dargestellten Stadium des Vorbeifahrens in der Fahrtrichtung F auch der Teilbereich 10b des Parkplatzes 10 und das Objekt 14 im Erfassungsbereich 12 der Senderleitung 5 lag, sind sowohl das Objekt 14 als auch der Teilbereich 10b Parklücke 10 in der Karte repräsentiert. Fährt nun das Kraftfahrzeug 2 mit dem angehängten Anhänger 3 weiter in Fahrtrichtung F an der Parklücke entlang, so werden früher oder später, beispielsweise in dem gezeigten Stadium des Szenarios, die Parklücke 10 mit einer entsprechenden Begrenzung oder Grenze 10' sowie Objekte 13, 14 in der Umgebung der Parklücke 10, welche die Parklücke 10 begrenzen, durch die Sensoreinrichtung 5 erfasst und in der Karte repräsentiert. Für die Karte werden also vorliegend unterschiedliche Einzel-Umgebungsdaten über die Parklücke 10 erfasst, welche zu Gesamt-Umgebungsdaten zusammengefügt werden. Somit kann die Parklücke 10 vollständig, also für das unterstützte Einparken hinreichend umfassend, in der Karte repräsentiert werden, obwohl die Parklücke zu keinem Zeitpunkt vollständig durch die Sensoreinrichtung 5 erfassbar ist oder war. Damit kann bei dem Einparken in Kenntnis der Gesamtabmessung 8 des Gespanns ein Einparkvorgang unterstützt werden, wie dies auch in Fig. 2 nochmals illustriert ist.

Im Gegensatz zu dem gezeigten Szenario würde unter normalen Fahrbedingungen ohne den Anhänger 3 auch über die heckseitigen Sensoren 6' des Kraftfahrzeugs 2 eine Information über die Umgebung 11 des Kraftfahrzeugs erfasst werden. In diesem Fall kann auch ein rückwärtiges Einparken des Kraftfahrzeugs 2 alleine problemlos durch die Fahrassistenzeinrichtung 1 unterstützt werden. Da nun die rückwärtigen Sensoren 6' deaktiviert sind, kann eine Warnfunktion des Kraftfahrzeugs 2 ohne weiteres nur in Bezug auf Hindernisse oder eine Grenze 10' der Parklücke 10 erfolgen, welche an den Seiten oder an der Front des Kraftfahrzeugs 2 angeordnet sind.

In Fig. 2 ist das soeben beschriebene beispielhafte Szenario in einem fortgeschrittenen Stadium des Einparkens gezeigt. Das Gespann mit Kraftfahrzeug 2 und Anhänger 1 ist vorliegend bereits in der Parklücke 10 eingeparkt. In der Karte wurde vorliegend auch eine Gesamt-Kontur 15 für das Kraftfahrzeug 2 mit dem angehängten Anhänger 3 festgelegt und an die Gesamt-Kontur 15 in Bereich 16 des Anhängers mehrere Zonen 17 festgelegt, für welche jeweils der Abstand dₐ, d_{b}, d_{c} zu der Grenze 10' der Parklücke 10 durch die Recheneinrichtung 4 (Fig. 1) bestimmt oder ermittelt wird. Derartige Zonen können durch die Fahrerassistenzeinrichtung 1 auch an einer Kontur des Kraftfahrzeugs 2 festgelegt sein, beispielsweise durch die jeweiligen Sensoren 6. Da für jede der Zonen 17, 17a, 17b, 17c der Abstand dₐ, d_{b}, d_{c} bestimmt wird, funktioniert das Verfahren hier als ob virtuelle Sensoren 6" an dem Anhänger 3 angeordnet wären, mittels welchen ein jeweiliger Abstand zwischen dem Anhänger 3 bzw. der Gesamt-Kontur 15 im Bereich 16 des Anhängers 3 erfasst beziehungsweise bestimmt werden kann. So sind beispielsweise in der gezeigten Ausführungsform heckseitig des Anhängers 3 eine zentrale Zone 17b, sowie 2 randseitige Zonen 17a und 17c festgelegt. Für jede dieser Zonen 17a, 17b, 17c wird nun vorliegend individuell der Abstand dₐ, d_{b}, d_{c} ermittelt. Da das Objekt 14, hier das parkende weitere Kraftfahrzeug, im gezeigten Beispiel in der zentralen Zone 17b näher an dem Anhänger 3 steht als in den beiden randseitigen Zonen 17a und 17c, ist der ermittelt Abstand die d_{b} geringer als die ermittelten Abstände dₐ und d_{c} der randseitigen Zonen 17a, 17c.

Vorliegend können so in der Kartendarstellung über die Anzeigeeinrichtung 7 (Fig. 1) gleichzeitig zonenspezifische Warnhinweise optisch an den Fahrer ausgegeben werden. Beispielsweise kann der entsprechende jeweilige Warnhinweis hier in Abhängigkeit eines Vergleichs des jeweiligen ermittelten Abstandes dₐ, d_{b}, d_{c} mit dem Mindestabstand dₘᵢₙ erfolgen. So kann beispielsweise die entsprechende Zone 17a, 17b, 17c in Abhängigkeit des Vergleichs des ermittelten Abstandes dₐ, d_{b}, d_{c} mit dem Mindestabstand dₘᵢₙ die Farbe wechseln. Im gezeigten Beispiel könnte so für die randseitigen Zonen 17a, 17c am Heck des Anhängers 3 die entsprechende Zone 17a, 17c gelb gefärbt werden, da die Abstände dₐ, d_{c} den Mindestabstand dₘᵢₙ unterschreiten. Da der Abstand d_{b} den Mindestabstand dₘᵢₙ deutlich stärker unterschreitet könnte die mittlere Zone 17b beispielsweise orange gefärbt werden. Der Fahrer, der einen Blick auf die Karte wirft, erfährt somit auf einfache Art und Weise, wie viel Platz noch in der Parklücke 10 ist, ohne dass hierfür real Sensoren an dem Heck des Anhängers 3 benötigt werden. Würde der Fahrer nun beispielsweise weiter zurücksetzen, so könnte sich mit der entsprechenden Verringerung der Abstände dₐ, d_{b}, d_{c} auch die Farbe der Zonen 17a, 17b, 17c ändern, beispielsweise in der zentralen Zone 17b auf Rot umspringen und in den beiden randseitigen Zonen 17a, 17c auf Orange.

Figur 3 zeigt ein beispielhaftes Szenario für ein Querparken in einem ersten Stadium. Auch hier ist das Kraftfahrzeug 2, welches beispielsweise eine Fahrerassistenzeinrichtung 1 (Fig. 1) wie für Figur 1 beschrieben umfassen kann, in einer Fahrtrichtung F an der Parklücke 10 vorbeigefahren. Im gezeigten Beispiel handelt es sich nun um eine Parklücke 10 für ein Querparken, also eine Parklücke 10, deren Längsrichtung senkrecht zur Fahrtrichtung F des Kraftfahrzeugs 2 steht. Im gezeigten Beispiel ist die Parklücke 10 nun aus der aktuellen Position des Kraftfahrzeugs 2 durch das Objekt 13, vorliegend ein quer geparktes weiteres Kraftfahrzeug, nahezu vollständig verdeckt. Da allerdings zuvor das Kraftfahrzeug 2 an der Parklücke 10 vorbeigefahren ist, wurde die Parklücke 10 auch durch die Sensoren 6 der Sensoreinrichtung 5 (Fig. 1) erfasst, da sie sich im Erfassungsbereich 12 der Sensoren 6 befand. Die entsprechenden Umgebungsdaten sind somit vorliegend in der Fahrerassistenzeinrichtung 1, beispielsweise wieder in Form einer Karte, hinterlegt. Da im gezeigten Beispiel die Sensoren 6 als zumindest ein Laserscanner ausgeführt sind, ist der Erfassungsbereich 12 hier groß genug, um auch eine Parklücke 10 für ein Querparken vollständig, das heißt in einer für das unterstützte Einparken hinreichenden Güte, zu erfassen. Handelt sich bei den Sensoren 6 um Sensoren mit einer geringeren Reichweite, so ist der Erfassungsbereich kleiner wie es beispielsweise mit dem weiteren Erfassungsbereich 12' angedeutet ist. Der gezeigte weitere Erfassungsbereich 12' ist beispielsweise zu klein um die Parklücke 10 für ein Querparken in einer ausreichenden Größe überhaupt bei einem Vorbeifahren detektieren erfassen zu können.

Vorliegend weist jedoch der Erfassungsbereich 12 eine ausreichende Ausdehnung auch senkrecht zur Fahrtrichtung F auf, sodass hier entsprechend dem beschriebenen Verfahren die Position des Gespannes relativ zu der Parklücke 10 und weiteren Objekten 13, 14 in der Umgebung 11 des Kraftfahrzeugs 2 ermittelt werden kann. Hier können beispielsweise Methoden der Odometrie zum Einsatz kommen, bei welchen dann auch der Anhängewinkel α berücksichtigt wird. Dieser ist vorliegend Null, da das Kraftfahrzeug 2 mit dem Anhänger 3 in einer Geradeausfahrt dargestellt ist. Besser zu erkennen ist der Anhängewinkel α in Fig. 4.

In Fig. 4 ist das beispielhafte Szenario aus Fig. 3 in einem fortgeschrittenen Stadium des Einparkens dargestellt. Zu sehen ist hier, wie der Anhänger 3 in die Parklücke 10 eingeparkt ist. In Abhängigkeit der Größe der Parklücke 10 kann nun beispielsweise entweder der Anhänger 3 abgekoppelt und das Fahrzeug 2 unabhängig von dem Anhänger 3 an einem anderen Ort eingeparkt werden, oder, einen ausreichend großen Erfassungsbereich 12 (Fig. 3) vorausgesetzt, das Gespann auch vollständig durch ein weiteres Rückstoßen in der Parklücke 10 geparkt werden.

## Patentansprüche

1. Verfahren zum Unterstützen eines Fahrers eines Kraftfahrzeugs (2) mit einem angehängten Anhänger (3) bei einem Einparken des Kraftfahrzeugs (2) mit dem Anhänger (3) in eine Parklücke (10) mit Hilfe einer Fahrerassistenzeinrichtung (1) des Kraftfahrzeugs (2),
mit den Schritten:
a) Bestimmen von zumindest einer Gesamt-Abmessung (8) des Kraftfahrzeugs (2) mit dem angehängten Anhänger (3) in Abhängigkeit zumindest einer vorgegebenen Abmessung (9) des Anhängers (3) durch eine Recheneinrichtung (4) der Fahrerassistenzeinrichtung (1);
b) Erfassen von Umgebungsdaten über eine Parklücke (10) in einer Umgebung (11) des Kraftfahrzeugs (2) durch eine Sensoreinrichtung (5) der Fahrerassistenzeinrichtung (1);
c) Einparken des Kraftfahrzeugs (2) mit dem angehängten Anhänger (3) in die Parklücke (10), wobei
c1) sich die Parklücke (10) bei dem Einparken zumindest teilweise außerhalb eines aktuellen Erfassungsbereiches (12, 12') der Sensoreinrichtung (5) des Kraftfahrzeugs (2) befindet;
c2) in Abhängigkeit einer Position des Kraftfahrzeugs (2) relativ zu der Parklücke (10) und der Gesamt-Abmessung (8) des Kraftfahrzeugs (2) mit dem angehängten Anhänger (3) durch die Recheneinrichtung (4) zumindest ein Abstand (dₐ, d_{b}, d_{c}) von dem Anhänger (3) zu einer Grenze (10') der Parklücke (10) ermittelt wird; und c3) falls der ermittelte Abstand (dₐ, d_{b}, d_{c}) kleiner ist als ein vorgegebener Mindestabstand (dₘᵢₙ) durch die Fahrerassistenzeinrichtung (1) ein Warnhinweis an den Fahrer ausgegeben wird
**dadurch gekennzeichnet, dass**
das Bestimmen der Gesamt-Abmessung (8) bei dem Einparken gemäß Schritt c) fortlaufend erfolgt und die Gesamt-Abmessung (8) in Abhängigkeit eines Anhängewinkels (a) des Anhängers (3) bestimmt wird.

2. Verfahren nach einem der vorhergehenden Ansprüche,
**dadurch gekennzeichnet, dass**
die zumindest eine vorgegebene Abmessung (9) des Anhängers (3) eine vorab in der Fahrerassistenzeinrichtung (1) abgespeicherte Abmessung (9) ist, welche insbesondere durch den Fahrer aus mehreren abgespeicherten Abmessungen ausgewählt wird.

3. Verfahren nach einem der Ansprüche 1 oder 2,
**dadurch gekennzeichnet, dass**
die zumindest eine vorgegebene Abmessung (9) während eines Fahrvorgangs des Kraftfahrzeugs (2) mit dem Anhänger (3) oder während des Einparkens des Kraftfahrzeugs (2) mit dem Anhänger (3) iterativ über ein Messen von unterschiedlichen Lenkwinkeleinschlägen des Kraftfahrzeugs (2) und von jeweils zugehörigen Veränderungen des Anhängewinkels (a) relativ zu dem Kraftfahrzeug (1) bestimmt wird.

4. Verfahren nach einem der vorhergehenden Ansprüche,
**dadurch gekennzeichnet, dass**
das Einparken gemäß Schritt c) zumindest teilautomatisiert, insbesondere hochautomatisiert oder vollautomatisiert erfolgt.

5. Verfahren nach einem der vorhergehenden Ansprüche,
**dadurch gekennzeichnet, dass**
das Erfassen gemäß Schritt b) mehrere aufeinanderfolgende Einzel-Erfassungsschritte umfasst, wobei in jedem Einzel-Erfassungsschritt Einzel-Umgebungsdaten über unterschiedliche Einzel-Bereiche (10a, 10b) der Parklücke (10) erfasst werden, wobei die Einzel-Umgebungsdaten die Parklücke (10) jeweils nur unvollständig repräsentieren.

6. Verfahren nach einem der vorhergehenden Ansprüche,
**dadurch gekennzeichnet, dass**
in Abhängigkeit der erfassten Umgebungsdaten, der vorgegebenen Abmessung (9) des Anhängers (3) mit dem Anhängewinkel (a) und der Position des Kraftfahrzeugs (2) durch das Fahrerassistenzsystem (1) eine Karte erzeugt wird, welche die Parklücke (10) und das Kraftfahrzeug (2) mit dem angehängten Anhänger (3) repräsentiert, wobei insbesondere der ermittelte Abstand (dₐ, d_{b}, d_{c}) anhand der Karte bestimmt wird.

7. Verfahren nach Anspruch 6,
**dadurch gekennzeichnet, dass**
in der Karte eine Gesamt-Kontur (15) für das Kraftfahrzeug (2) mit dem angehängten Anhänger (3) festgelegt wird und für einen Umgebungsbereich des Anhängers (3), welcher außerhalb des Erfassungsbereiches (12, 12') der Sensoreinrichtung (5) des Kraftfahrzeugs (2) liegt, zumindest eine an die Gesamt-Kontur (15) angrenzende Zone (17, 17a, 17b, 17c) festgelegt wird, für welche der ermittelte Abstand (dₐ, d_{b}, d_{c}) zu der Grenze (10') der Parklücke (10) bestimmt wird.

8. Verfahren nach Anspruch 6 oder 7,
**dadurch gekennzeichnet, dass**
die Position des Anhängers (3) in der Karte mittels einer Odometrie bestimmt wird, insbesondere in Abhängigkeit eines Lenkwinkels des Kraftfahrzeugs (2) und/oder des Anhängewinkels (a) des Anhängers.

9. Verfahren nach einem der Ansprüche 6 bis 8,
**dadurch gekennzeichnet, dass**
die Karte dem Fahrer über eine Anzeigeeinrichtung (7) der Fahrerassistenzeinrichtung (1) angezeigt wird.

10. Verfahren nach einem der vorhergehenden Ansprüche,
**dadurch gekennzeichnet, dass**
in Abhängigkeit des ermittelten Abstandes (dₐ, d_{b}, d_{c}) mehrere Warnhinweise an den Fahrer ausgegeben werden können, insbesondere bei mehreren Zonen (17, 17a, 17b, 17c) gleichzeitig für unterschiedliche Zonen (17, 17a, 17b, 17c) visuelle Warnhinweise über die Anzeigeeinrichtung (7) angezeigt werden.

11. Verfahren nach einem der vorhergehenden Ansprüche,
**dadurch gekennzeichnet, dass**
Einparken unabhängig von Sensordaten, welche durch eine Sensoreinrichtung des Anhängers (3) erfassbar sind, durchgeführt wird, insbesondere der Anhänger (3) nicht über eine entsprechende Sensoreinrichtung verfügt.

12. Fahrerassistenzeinrichtung (1) zum Unterstützen eines Fahrers eines Kraftfahrzeugs (2) mit einem angehängten Anhänger (3) bei einem Einparken des Kraftfahrzeugs (2) mit dem Anhänger (3) in eine Parklücke (10), mit
- einer Recheneinrichtung (4), die ausgelegt ist, zumindest eine Gesamt-Abmessung (8) des Kraftfahrzeugs (2) mit dem angehängten Anhänger (3) in Abhängigkeit zumindest einer vorgegebenen Abmessung (9) des Anhängers (3) zu bestimmen;
- einer Sensoreinrichtung (5), die ausgelegt ist, Umgebungsdaten über eine Parklücke (10) in einer Umgebung (11) des Kraftfahrzeugs (2) zu erfassen; wobei die Fahrerassistenzeinrichtung (1) ausgelegt ist, bei einem Einparken des Kraftfahrzeugs (2) mit dem angehängten Anhänger (3) in die Parklücke (10), bei welchem sich die Parklücke (10) zumindest teilweise außerhalb eines aktuellen Erfassungsbereiches (12, 12') der Sensoreinrichtung (5) des Kraftfahrzeugs (2) befindet, einen Warnhinweis an den Fahrer auszugeben, falls zumindest ein ermittelter Abstand (dₐ, d_{b}, d_{c}) von dem Anhänger (3) zu einer Grenze (10') der Parklücke (10), welcher durch die Recheneinrichtung (4) in Abhängigkeit einer Position des Kraftfahrzeugs (2) relativ zu der Parklücke (10) und in Abhängigkeit der Gesamt-Abmessung (8) des Kraftfahrzeugs (2) mit dem angehängten Anhänger (3) ermittelt ist, kleiner ist als ein vorgegebener Mindestabstand (dmin), **dadurch gekennzeichnet, dass** die Recheneinrichtung (4) dazu eingerichtet ist, das Bestimmen der Gesamt-Abmessung (8) fortlaufend und in Abhängigkeit eines Anhängewinkels (a) des Anhängers (3) zu bestimmen.

13. Fahrerassistenzeinrichtung (1) nach Anspruch 12,
**dadurch gekennzeichnet, dass**
die Sensoreinrichtung (5) einen Laserscanner umfasst.

14. Kraftfahrzeug (2) mit einer Fahrerassistenzeinrichtung (1) nach Anspruch 12 oder 13.

## Claims

1. Method for assisting a driver of a motor vehicle (2) with a hitched trailer (3) when parking the motor vehicle (2) with the trailer (3) in a parking space (10) with the aid of a driver assistance device (1) of the motor vehicle (2),
having the steps of:
a) determining at least an overall dimension (8) of the motor vehicle (2) with the hitched trailer (3) in dependence on at least one specified dimension (9) of the trailer (3) by way of a computation device (4) of the driver assistance device (1);
b) capturing environment data relating to a parking space (10) in an environment (11) of the motor vehicle (2) by way of a sensor device (5) of the driver assistance device (1) ;
c) parking the motor vehicle (2) with the hitched trailer (3) in the parking space (10), wherein
c1) during the parking operation, the parking space (10) is located at least in part outside a current capturing region (12, 12') of the sensor device (5) of the motor vehicle (2);
c2) at least one distance (dₐ, d_{b}, d_{c}) from the trailer (3) to a boundary (10') of the parking space (10) is ascertained by way of the computation device (4) in dependence on a position of the motor vehicle (2) relative to the parking space (10) and the overall dimension (8) of the motor vehicle (2) with the hitched trailer (3); and
c3) if the ascertained distance (dₐ, d_{b}, d_{c}) is less than a specified minimum distance (dₘᵢₙ) , an alert is issued to the driver by way of the driver assistance device (1), **characterized in that**
the determination of the overall dimension (8) during the parking operation according to step c) is continuous and the overall dimension (8) is determined in dependence on a hitching angle (α) of the trailer (3).

2. Method according to one of the preceding claims,
**characterized in that**
the at least one specified dimension (9) of the trailer (3) is a dimension (9) that was stored in the driver assistance device (1) in advance and is selected in particular by the driver from a plurality of stored dimensions.

3. Method according to one of Claims 1 or 2,
**characterized in that**
the at least one specified dimension (9) is determined iteratively during a driving operation of the motor vehicle (2) with the trailer (3) or during the parking operation of the motor vehicle (2) with the trailer (3) by way of measuring different steering angles of the motor vehicle (2) and respectively associated changes in the hitching angle (α) relative to the motor vehicle (1) .

4. Method according to one of the preceding claims,
**characterized in that**
the parking operation according to step c) is performed in a manner that is at least partially automated, in particular highly automated or fully automated.

5. Method according to one of the preceding claims,
**characterized in that**
capturing according to step b) comprises a plurality of successive individual capturing steps, wherein, in each individual capturing step, individual environment data relating to different individual regions (10a, 10b) of the parking space (10) are captured, wherein the individual environment data in each case only incompletely represent the parking space (10).

6. Method according to one of the preceding claims,
**characterized in that**
a map is created via the driver assistance system (1) in dependence on the captured environment data, the specified dimension (9) of the trailer (3) with the hitching angle (α) and the position of the motor vehicle (2), with the map representing the parking space (10) and the motor vehicle (2) with the hitched trailer (3), wherein in particular the ascertained distance (dₐ, d_{b}, d_{c}) is determined using the map.

7. Method according to Claim 6,
**characterized in that**
an overall contour (15) for the motor vehicle (2) with the hitched trailer (3) is defined in the map and at least one zone (17, 17a, 17b, 17c), which adjoins the overall contour (15) and for which the ascertained distance (dₐ, d_{b}, d_{c}) from the boundary (10') of the parking space (10) is determined, is defined for an environment region of the trailer (3) located outside the capturing region (12, 12') of the sensor device (5) of the motor vehicle (2).

8. Method according to Claim 6 or 7,
**characterized in that**
the position of the trailer (3) in the map is determined using odometry, in particular in dependence on a steering angle of the motor vehicle (2) and/or on the hitching angle (α) of the trailer.

9. Method according to one of Claims 6 to 8,
**characterized in that**
the map is displayed to the driver using a display device (7) of the driver assistance device (1).

10. Method according to one of the preceding claims,
**characterized in that**
a plurality of alerts can be issued to the driver in dependence on the ascertained distance (dₐ, d_{b}, d_{c}), in particular, in the case of a plurality of zones (17, 17a, 17b, 17c), visual alerts are displayed via the display device (7) simultaneously for different zones (17, 17a, 17b, 17c) .

11. Method according to one of the preceding claims,
**characterized in that**
parking is performed independently of sensor data that are capturable by a sensor device of the trailer (3), in particular the trailer (3) does not have a corresponding sensor device.

12. Driver assistance device (1) for assisting a driver of a motor vehicle (2) with a hitched trailer (3) when parking the motor vehicle (2) with the trailer (3) in a parking space (10), having
- a computation device (4), which is configured to determine at least one overall dimension (8) of the motor vehicle (2) with the hitched trailer (3) in dependence on at least one specified dimension (9) of the trailer (3) ;
- a sensor device (5), which is configured to capture environment data relating to a parking space (10) in an environment (11) of the motor vehicle (2);
wherein the driver assistance device (1) is designed to issue an alert to the driver in the case that the motor vehicle (2) with the hitched trailer (3) is being parked in the parking space (10) when the parking space (10) is located at least in part outside a current capturing region (12, 12') of the sensor device (5) of the motor vehicle (2) if at least one ascertained distance (dₐ, d_{b}, d_{c}) from the trailer (3) to a boundary (10') of the parking space (10), which is ascertained by way of the computation device (4) in dependence on a position of the motor vehicle (2) relative to the parking space (10) and in dependence on the overall dimension (8) of the motor vehicle (2) with the hitched trailer (3), is smaller than a specified minimum distance (dₘᵢₙ), **characterized in that** the computation device (4) is configured to determine the determination of the overall dimension (8) continuously and in dependence on a hitching angle (α) of the trailer (3) .

13. Driver assistance device (1) according to Claim 12,
**characterized in that**
the sensor device (5) comprises a laser scanner.

14. Motor vehicle (2) having a driver assistance device (1) according to Claim 12 or 13.

## Revendications

1. Procédé d'assistance au conducteur d'un véhicule automobile (2) avec une remorque attelée (3) lors d'une mise en stationnement du véhicule automobile (2) avec la remorque (3) dans une place de stationnement (10) à l'aide d'un dispositif d'assistance au conducteur (1) du véhicule automobile (2),
comprenant les étapes consistant à :
a) déterminer au moins une dimension globale (8) du véhicule automobile (2) avec la remorque attelée (3) en fonction d'au moins une dimension (9) spécifiée de la remorque (3) par un dispositif de calcul (4) du dispositif d'assistance au conducteur (1) ;
b) détecter des données d'environnement concernant une place de stationnement (10) dans un environnement (11) du véhicule automobile (2) par un dispositif capteur (5) du dispositif d'assistance au conducteur (1) ;
c) mettre en stationnement le véhicule automobile (2) avec la remorque attelée (3) dans la place de stationnement (10), dans lequel
c1) lors de la mise en stationnement, la place de stationnement (10) se trouve au moins partiellement en dehors d'une zone de détection actuelle (12, 12') du dispositif capteur (5) du véhicule automobile (2) ;
c2) en fonction d'une position du véhicule automobile (2) par rapport à la place de stationnement (10) et de la dimension globale (8) du véhicule automobile (2) avec la remorque attelée (3), le dispositif de calcul (4) trouve au moins une distance (dₐ, d_{b}, d_{c}) de la remorque (3) à une limite (10') de la place de stationnement (10) ; et
c3) si la distance trouvée (dₐ, d_{b}, d_{c}) est inférieure à une distance minimale (dₘᵢₙ) spécifiée par le dispositif d'assistance au conducteur (1), un avertissement est émis à l'intention du conducteur,
**caractérisé en ce que** la détermination de la dimension globale (8) lors de la mise en stationnement selon l'étape c) est effectuée en continu, et la dimension globale (8) est déterminée en fonction d'un angle d'attelage (α) de la remorque (3).

2. Procédé selon l'une quelconque des revendications précédentes, **caractérisé en ce que** ladite au moins une dimension (9) spécifiée de la remorque (3) est une dimension (9) enregistrée préalablement dans le dispositif d'assistance au conducteur (1) et qui est en particulier sélectionnée par le conducteur parmi plusieurs dimensions enregistrées.

3. Procédé selon l'une quelconque des revendications 1 ou 2, **caractérisé en ce que** ladite au moins une dimension (9) spécifiée est déterminée de manière itérative pendant une opération de conduite du véhicule automobile (2) avec la remorque (3) ou pendant la mise en stationnement du véhicule automobile (2) avec la remorque (3) par une mesure de différents angles de braquage du véhicule automobile (2) et de variations respectivement associées de l'angle d'attelage (a) par rapport au véhicule automobile (1).

4. Procédé selon l'une quelconque des revendications précédentes, **caractérisé en ce que** la mise en stationnement selon l'étape c) est effectuée de manière au moins semi-automatisée, en particulier hautement automatisée ou entièrement automatisée.

5. Procédé selon l'une quelconque des revendications précédentes, **caractérisé en ce que** la détection selon l'étape b) comprend plusieurs étapes de détection individuelles consécutives, dans lequel, à chaque étape de détection individuelle, des données d'environnement individuelles sont détectées pour différentes zones individuelles (10a, 10b) de la place de stationnement (10), les données d'environnement individuelles ne représentant la place de stationnement (10) que de manière incomplète respectivement.

6. Procédé selon l'une quelconque des revendications précédentes, **caractérisé en ce qu'**en fonction des données d'environnement détectées, de la dimension (9) spécifiée de la remorque (3) avec l'angle d'attelage (a) et de la position du véhicule automobile (2), le système d'assistance au conducteur (1) génère une carte qui représente la place de stationnement (10) et le véhicule automobile (2) avec la remorque attelée (3), la distance trouvée (dₐ, d_{b}, d_{c}) étant en particulier déterminée à l'aide de la carte.

7. Procédé selon la revendication 6, **caractérisé en ce que** sur la carte, un contour complet (15) pour le véhicule automobile (2) avec la remorque attelée (3) est défini, et pour une zone environnante de la remorque (3) qui est située en dehors de la zone de détection (12, 12') du dispositif capteur (5) du véhicule automobile (2), au moins une zone (17, 17a, 17b, 17c) adjacente au contour complet (15) est définie pour laquelle la distance trouvée (dₐ, d_{b}, d_{c}) jusqu'à la limite (10') de la place de stationnement (10) est déterminée.

8. Procédé selon la revendication 6 ou 7, **caractérisé en ce que** la position de la remorque (3) sur la carte est déterminée par odométrie, en particulier en fonction d'un angle de direction du véhicule automobile (2) et/ou de l'angle d'attelage (a) de la remorque.

9. Procédé selon l'une quelconque des revendications 6 à 8, **caractérisé en ce que** la carte est affichée pour le conducteur par un dispositif d'affichage (7) du dispositif d'assistance au conducteur (1).

10. Procédé selon l'une quelconque des revendications précédentes, **caractérisé en ce qu'**en fonction de la distance trouvée (dₐ, d_{b}, d_{c}), plusieurs avertissements peuvent être émis à l'intention du conducteur, en particulier dans le cas de plusieurs zones (17, 17a, 17b, 17c), des avertissements visuels sont affichés par le dispositif d'affichage (7) simultanément pour différentes zones (17, 17a, 17b, 17c).

11. Procédé selon l'une quelconque des revendications précédentes, **caractérisé en ce que** la mise en stationnement est effectuée indépendamment de données de capteur qui peuvent être détectées par un dispositif capteur de la remorque (3), en particulier **en ce que** la remorque (3) ne dispose d'aucun dispositif capteur correspondant.

12. Dispositif d'assistance au conducteur (1) permettant d'assister un conducteur d'un véhicule automobile (2) avec une remorque attelée (3) lors d'une mise en stationnement du véhicule automobile (2) avec la remorque (3) dans une place de stationnement (10), comprenant
- un dispositif de calcul (4) qui est conçu pour déterminer au moins une dimension globale (8) du véhicule automobile (2) avec la remorque attelée (3) en fonction d'au moins une dimension (9) spécifiée de la remorque (3) ;
- un dispositif capteur (5) qui est conçu pour détecter des données d'environnement concernant une place de stationnement (10) dans un environnement (11) du véhicule automobile (2) ;
le dispositif d'assistance au conducteur (1) étant conçu, lors d'une mise en stationnement du véhicule automobile (2) avec la remorque attelée (3) dans la place de stationnement (10), la place de stationnement (10) se trouvant au moins partiellement en dehors d'une zone de détection actuelle (12, 12') du dispositif capteur (5) du véhicule automobile (2), pour émettre un avertissement à l'intention du conducteur si au moins une distance trouvée (dₐ, d_{b}, d_{c}) d'une remorque (3) à une limite (10') de la place de stationnement (10), qui est trouvée par le dispositif de calcul (4) en fonction d'une position du véhicule automobile (2) par rapport à la place de stationnement (10) et en fonction de la dimension globale (8) du véhicule automobile (2) avec la remorque attelée (3), est inférieure à une distance minimale (dₘᵢₙ) spécifiée,
**caractérisé en ce que** le dispositif de calcul (4) est aménagé pour déterminer la détermination de la dimension globale (8) en continu et en fonction d'un angle d'attelage (α) de la remorque (3).

13. Dispositif d'assistance au conducteur (1) selon la revendication 12, **caractérisé en ce que** le dispositif capteur (5) comprend un scanner laser.

14. Véhicule automobile (2) comprenant un dispositif d'assistance au conducteur (1) selon la revendication 12 ou 13.
